(19) Europäisches Patentamt
European Patent Office
Office européen des brevets

(11) **EP 4 708 600 A2**

(12) **EUROPEAN PATENT APPLICATION**

(43) Date of publication:
**11.03.2026 Bulletin 2026/11**

(21) Application number: **26153130.5**

(22) Date of filing: **19.09.2023**

(51) International Patent Classification (IPC):
**H02G 15/08** $^{(2006.01)}$

(52) Cooperative Patent Classification (CPC):
**H02G 1/14; H01R 4/203; H01R 9/0503;
H02G 15/02; H02G 15/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(62) Document number(s) of the earlier application(s) in
accordance with Art. 76 EPC:
**23786350.1 / 4 548 439**

(71) Applicant: **Sumiden Transmission and
Distribution System Products, Ltd.
Itami-shi, Hyogo 664-0837 (JP)**

(72) Inventor: **KAZAMA, Tatsuya
Hyogo, 664-0837 (JP)**

(74) Representative: **Grünecker Patent- und
Rechtsanwälte
PartG mbB
Leopoldstraße 4
80802 München (DE)**

Remarks:
This application was filed on 21.01.2026 as a
divisional application to the application mentioned
under INID code 62.

(54) **CABLE CONNECTION STRUCTURE, CONNECTED POWER CABLE, AND METHOD OF PRODUCING CABLE CONNECTION STRUCTURE**

(57)    The present invention refers to a cable connection structure comprising a pair of power cables, each having a conductor, and a sleeve configured as a cylindrical metallic member and connecting the conductors of the pair of power cables. The sleeve comprises: multiple first indents recessed in radial directions of the sleeve and located at positions separated from each other on a first outer circumference of the sleeve, and multiple second indents recessed in the radial directions of the sleeve and located at positions separated from each other on a second outer circumference that is different from the first outer circumference in an axial direction of the sleeve, wherein at least one indent among the multiple indents is arranged along a circumferential direction of the sleeve having a depth different from depths of other indents on the outer circumference of the sleeve, and wherein the sleeve has a point-asymmetric shape with respect to a central axis of the sleeve on a cross-section orthogonal to the central axis.

[Fig. 1]

EP 4 708 600 A2

**Description**

[Technical Field]

The present disclosure relates to a cable connection structure, a connected power cable, and a method of producing the cable connection structure.

[Background Art]

In a case of connecting a pair of power cables, a conductor may sometimes be connected by compressing a sleeve (e.g., PTL. 1).

[Citation List]

[Patent Literature]

PTL. 1: Japanese Patent Laid-Open Publication No. H11-41779

[Summary of Invention]

[Solution to Problem]

According to an aspect of the present disclosure,

there is provided a cable connection structure, including:

a pair of power cables, each having a conductor; and

a sleeve being cylindrical and connecting the conductors of the pair of power cables,

the sleeve including:

multiple first indents recessed in radial directions of the sleeve and located at positions separated from each other on a first outer circumference of the sleeve, and

multiple second indents recessed in the radial directions of the sleeve and located at positions separated from each other on a second outer circumference that is different from the first outer circumference in an axial direction of the sleeve, and

at least one indent among the multiple indents arranged along a circumferential direction of the sleeve having a depth different from depths of other indents on the outer circumference of the sleeve.

[Brief Description of Drawings]

[FIG. 1]

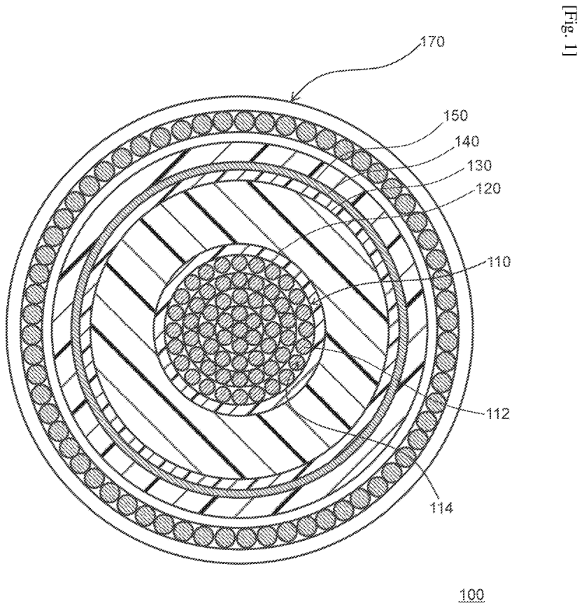

FIG. 1 is a schematic cross-sectional view of a power cable.
[FIG. 2]

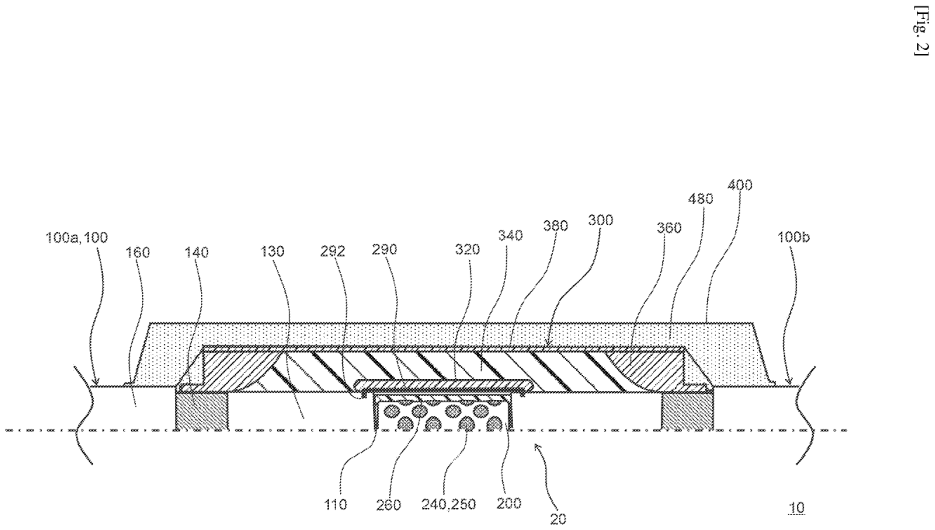

FIG. 2 is a schematic cross-sectional view along an axial direction of a conductor, illustrating a cable connection structure according to an embodiment of the present disclosure.
[FIG. 3]

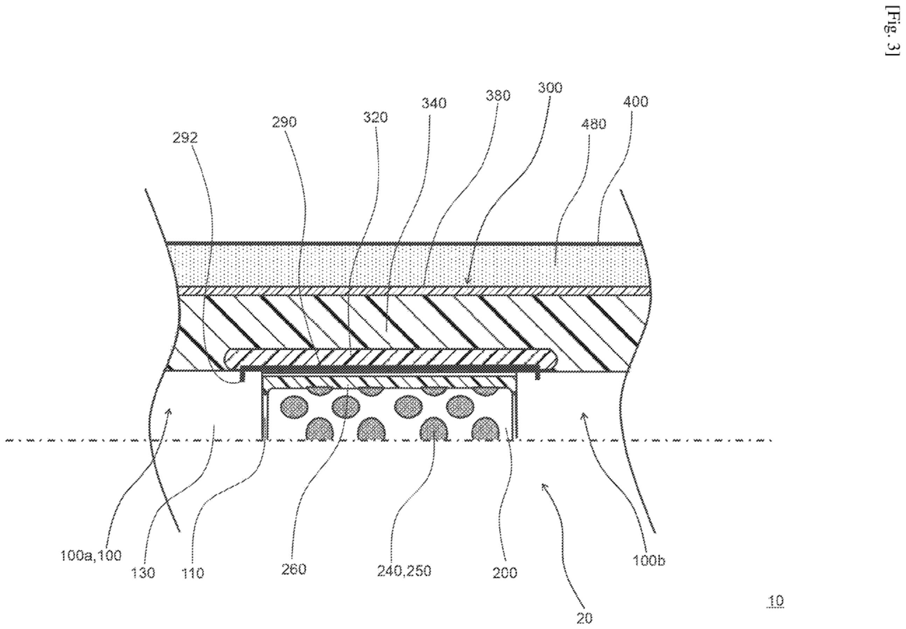

FIG. 3 is an enlarged schematic cross-sectional view of a part of FIG. 2.
[FIG. 4A]

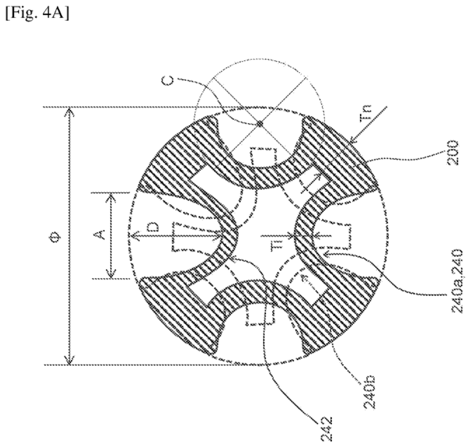

FIG. 4A is a cross-sectional view orthogonal to a central axis of the sleeve according to an embodiment of the present disclosure.
[FIG. 4B]

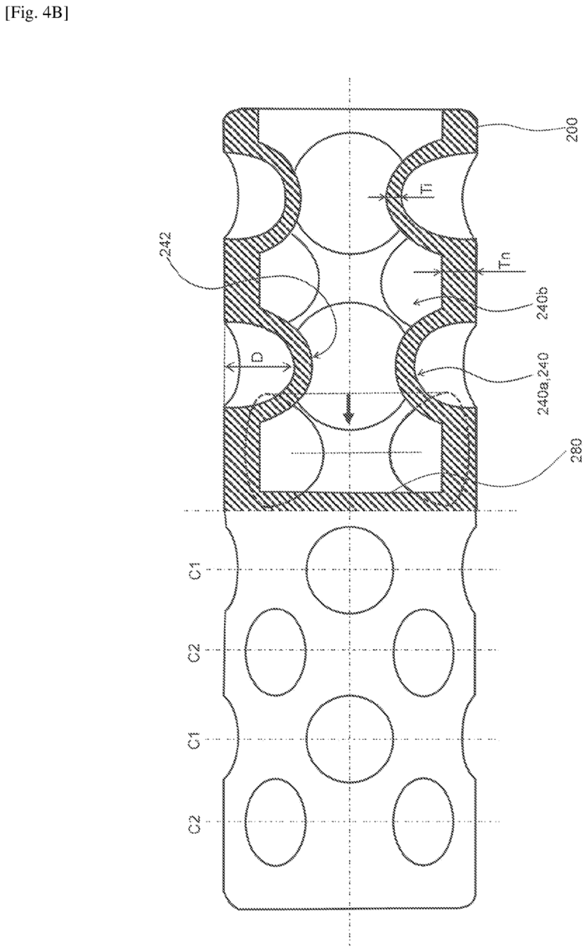

FIG. 4B shows a side view of the sleeve and a cross-sectional view along the central axis of the sleeve, according to an embodiment of the present disclosure.
[FIG. 5A]

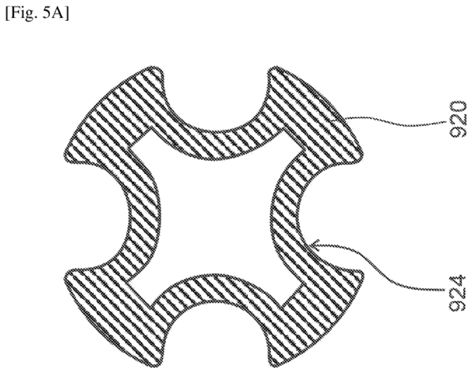

FIG. 5A is a cross-sectional view orthogonal to a central axis of the sleeve of a comparative example.
[FIG. 5B]

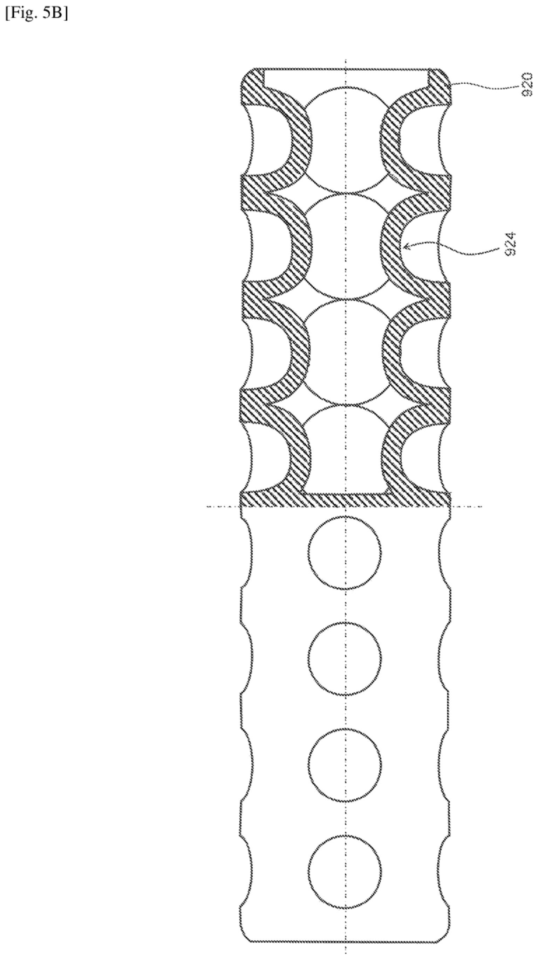

FIG. 5B shows a side view of the sleeve and a cross-sectional view along the central axis of the sleeve, of the comparative example.

[Description of Embodiments]

[Problem to be Solved by the Present Disclosure]

An object of the present disclosure is to stably connect conductors with axial length of the sleeve being shortened.

[Advantageous Effect of the Present Disclosure]

According to the present disclosure, conductors can be stably connected with axial length of the sleeve being shortened.

[Description of Embodiment of the Present Disclosure]

<Knowledges Obtained by the Inventor>

First, the knowledges obtained by the inventor will be described.

**In** recent years, conductors containing aluminum have been increasingly applied to make power cables lighter or to reduce the cost of producing power cables. In a case of connecting power cables including the aluminum conductors, however, since the conductor wire has an aluminum oxide film formed on its outer circumference, there is a need to remove such an oxide film.

In a situation where the conductor wire has an oxide film as described above, the following problems may occur in connecting power cables.

For example, in a method involving compressing a sleeve so that its cross-section is hexagonal, such as a method that has been applied to copper conductors in the past, a longer sleeve length is required to reduce the contact resistance between the sleeve and the aluminum conductor.

For example, in a method involving welding aluminum conductors, the mechanical strength of the welded part may decrease or the work time for welding may increase.

For example, in a method involving tightening a bolt inserted in a radial direction from an outer circumference of the sleeve toward the aluminum conductor, it is difficult to sufficiently break the oxide film on the conductor wire with a flat surface of a tip of the bolt. Therefore, an electrical resistance of the conductor connection part tends to be high.

In order to solve these problems, the present inventor has studied a method of forming indents recessed in radial directions of the sleeve.

Now, a sleeve 920 of a comparative example will be described with reference to FIG. 5A and FIG. 5B. As illustrated in FIG. 5A and FIG. 5B, the sleeve 920 of the comparative example has multiple indents 924 at positions separated from each other on a predetermined circumference of the sleeve 920. In addition, the multiple indents 924 are provided on multiple circumferences which are different from each other in an axial direction of the sleeve 920. With such a configuration, the contact resistance between the sleeve 920 and the conductor can be reduced.

In the comparative example, however, when viewed in the axial direction of the sleeve 920, the first indents 924 provided on a predetermined outer circumference of the sleeve 920 are provided at the same positions as the second indents 924 on an outer circumference that is different from the outer circumference on which the first indents 924 are provided. In such a configuration, the closer the first indents 924 are to the second indents 924 that are continuously arranged in the axial direction of the sleeve 920, the less irregular the inner circumferential surface of the sleeve 920 may be and the smaller the contact area between the sleeve 920 and the conductor may be. For this reason, in the comparative example, it is necessary to separate the first indent 924 from the second indent 924 at a predetermined distance in the axial direction of the sleeve 920 in order to suppress a reduction in the contact area between the sleeve 920 and the conductor. As a result, the axial length of the sleeve 920 is longer.

Therefore, the present inventor has intensively studied the arrangement of the indents in the sleeve described above. As a result, the present inventor has found a configuration capable of stably connecting the conductors with axial length of the sleeve being shortened.

The present disclosure described below is based on the above-described knowledges found by the present inventor.

<Embodiments of the Present Disclosure>

Next, embodiments of the present disclosure will be listed and described.

[1] A cable connection structure according to an aspect of the present disclosure includes:

a pair of power cables, each having a conductor; and

a sleeve being cylindrical and connecting the conductors of the pair of power cables,

the sleeve including:

multiple first indents recessed in radial directions of the sleeve and located at positions separated from each other on a first outer circumference of the sleeve, and

multiple second indents recessed in the radial directions of the sleeve and located at positions separated from each other on a second outer circumference that is different from the first outer circumference in an axial direction of the sleeve,

at least one indent among the multiple indents arranged along a circumferential direction of the sleeve having a depth different from depths of other indents on the outer circumference of the sleeve.

With this configuration, conductors can be stably connected with axial length of the sleeve being shortened. Contact resistance can be stably reduced, and tensile strength can be stably improved.

[2] In the cable connection structure according to [1],

each of the pair of power cables includes the conductor, and a cable insulating layer provided to cover an outer circumference of the conductor,

the sleeve connects the conductors exposed from the cable insulating layers of the pair of power cables, and

a semiconductive tape layer is provided to fill a difference in level between an outer circumference of the cable insulating layer of each of the pair of power cables and the outer circumference of the sleeve.

With this configuration, damage of an insulating cylinder caused by contact with a corner part of an aperture of the indent of the sleeve can be suppressed. Heat retention due to an air layer can also be suppressed.

[3] In the cable connection structure according to [2],

the cable connection structure further includes a sleeve cover provided to surround the outer circumference of the sleeve and locked to a tip of the cable insulating layer of each of the pair of power cables, and

the semiconductive tape layer is provided from the outer circumference of the sleeve to a position closer to the sleeve than an inner circumference of the sleeve cover by 0.5 mm or more and 1 mm or less.

With this configuration, the sleeve cover can be stably mounted and heat retention due to the air layer can be suppressed.

[4] In the cable connection structure according to any one of [1] to [3],

the cable connection structure further includes filling parts, each of which is filled in each of the multiple first indents and the multiple second indents on the outer circumference of the sleeve.

With this configuration, heat retention due to a void can be suppressed.

[5] In the cable connection structure according to [4],

the filling part contains putty or clay.

With this configuration, generation of a void in the indent can be stably suppressed.

[6] In the cable connection structure according to any one of [1] to [5],

on the outer circumference of the sleeve, depths of the multiple indents arranged along the circumferential direction of the sleeve satisfy the following formula (1):

$$0.02 \leqq (Dcmax - Dcmin)/Dcavg \leqq 0.8 \cdots (1)$$

wherein Dcmax, Dcmin, and Dcavg respectively indicate the maximum, minimum, and average values of the depths of the multiple indents arranged along the circumferential direction of the sleeve.

With this configuration, an effect to reduce contact resistance and an effect to improve tensile strength can be stably achieved.

[7] In the cable connection structure according to any one of [1] to [6],

the multiple first indents and the multiple second indents are provided alternately in the axial direction of the sleeve, and

at least one indent among the multiple indents arranged along the axial direction of the sleeve has a depth different from depths of other indents on the outer circumference of the sleeve.

With this configuration, contact resistance can be stably reduced, and tensile strength can be stably improved.

[8] In the cable connection structure according to any one of [1] to [7],

the multiple first indents and the multiple second indents are provided alternately in the axial direction of the sleeve, and

on the outer circumference of the sleeve, depths of the multiple indents arranged along the axial direction of the sleeve satisfy the following formula (2):

$$0.02 \leqq (Damax - Damin)/Daavg \leqq 0.8 \cdots (2)$$

wherein Damax, Damin, and Daavg respectively indicate the maximum, minimum, and average values of the depths of the multiple indents arranged along the axial direction of the sleeve.

With this configuration, an effect to reduce contact resistance and an effect to improve tensile strength can be stably achieved.

[9] In the cable connection structure according to any one of [1] to [8],

at least one indent among all the indents provided on the sleeve has a depth different from depths of other indents on the outer circumference of the sleeve.

With this configuration, contact resistance can be stably reduced, and tensile strength can be stably improved.

[10] In the cable connection structure according to any one of [1] to [9],

on the outer circumference of the sleeve, depths of all the indents satisfy the following formula (3):

$$0.01 \leqq \sigma/Davg \leqq 0.4 \cdots (3)$$

wherein σ and Davg respectively indicate the standard deviation and average values of the depths of all the indents.

With this configuration, an effect to reduce contact resistance and an effect to improve tensile strength can be stably achieved.

[11] In the cable connection structure according to any one of [1] to [10],

the multiple first indents and the multiple second indents have random depths.

With this configuration, an effect to reduce contact resistance and an effect to improve tensile strength can be stably achieved.

[12] In the cable connection structure according to any one of [1] to [11],

each of the multiple first indents and the multiple second indents is not in contact with another indent on an inner circumference of the sleeve.

With this configuration, interference of compression pins can be suppressed when compressing the multiple indents at the same time.

[13] In the cable connection structure according to any one of [1] to [12],

the sleeve has a point-asymmetric shape with respect to a central axis of the sleeve on a cross-section orthogonal to the central axis.

With this configuration, contact resistance can be stably reduced, and tensile strength can be stably improved.

[14] In the cable connection structure according to any one of [1] to [13],

the sleeve has a rotationally asymmetric shape around a central axis of the sleeve on a cross-section orthogonal to the central axis.

With this configuration, contact resistance can be stably reduced, and tensile strength can be stably improved.

[15] In the cable connection structure according to any one of [1] to [14],

the sleeve has a plane-asymmetric shape across a cross-section orthogonal to a central axis of the sleeve in a middle of the sleeve in the axial direction.

With this configuration, contact resistance can be stably reduced, and tensile strength can be stably improved.

[16] In the cable connection structure according to any one of [1] to [15],

a thickness at each of the multiple first indents and the multiple second indents is thinner than thicknesses at positions other than the multiple first indents and the multiple second indents.

With this configuration, contact resistance can be stably reduced, and tensile strength can be stably improved.

[17] In the cable connection structure according to any one of [1] to [16],

the thickness of the sleeve satisfies the following formula (4):

$$0.1 \leqq Ti/Tn < 1 \quad \cdots \quad (4)$$

wherein Ti indicates a thickness at each of the multiple first indents and the multiple second indents, and Tn indicates a thickness at a position other than the multiple first indents and the multiple second indents.

With this configuration, breakage of the sleeve itself can be suppressed, and both of reduction in contact resistance and improvement in tensile strength can be stably achieved.

[18] In the cable connection structure according to any one of [1] to [17],

the sleeve satisfies the following formula (5):

$$0.1 \leqq D/\Phi \leqq 0.4 \quad \cdots (5)$$

wherein D indicates a depth of each of the multiple first indents and the multiple second indents on the outer circumference of the sleeve, and $\Phi$ indicates a diameter of circumscribed circle of the sleeve.

With this configuration, contact resistance can be stably reduced, and tensile strength can be stably improved.

[19] In the cable connection structure according to any one of [1] to [18],

on the outer circumference of the sleeve, each of the multiple first indents and the multiple second indents satisfies the following formula (6):

$$0.1 \leqq D/A \leqq 0.4 \quad \cdots (6)$$

wherein D and A respectively indicate a depth and a diameter of aperture of each of the multiple first indents and the multiple second indents on the outer circumference of the sleeve.

With this configuration, contact resistance can be stably reduced, and tensile strength can be stably improved.

[20] In the cable connection structure according to any one of [1] to [19],

the sleeve satisfies the following formula (7):

$$0.2 \leqq A/\Phi \leqq 1.0 \quad \cdots (7)$$

wherein A indicates a diameter of aperture of each of the multiple first indents and the multiple second indents on the outer circumference of the sleeve, and $\Phi$ indicates a diameter of circumscribed circle of the sleeve.

With this configuration, contact resistance can be stably reduced, and tensile strength can be stably improved.

[21] In the cable connection structure according to any one of [1] to [20],

each of the multiple first indents and the multiple second indents has a convex surface on an inner circumference of the sleeve, and

the convex surface is curved in a spherical shape convex toward a central axis of the sleeve.

With this configuration, the conductor is smoothly squeezed with the convex spherical surfaces, so that breakage of the conductor wire can be suppressed.

[22] In the cable connection structure according to [21]

on the inner circumference of the sleeve, a center of curvature of each of the multiple first indents and the multiple second indents is arranged at a position closer to a central axis of the sleeve than a circumscribed circle of the sleeve.

With this configuration, the convex spherical surface can be brought into contact with a large number of conductor wires over a wide range of the convex surface.

[23] In the cable connection structure according to any one of [1] to [22],

each of the multiple first indents and the multiple second indents does not radially penetrate through the sleeve.

With this configuration, breakage of the sleeve itself, originating from the indent, can be suppressed.

[24] In the cable connection structure according to any one of [1] to [23],

the multiple second indents are provided at positions different from positions of the multiple first indents in the circumferential direction of the sleeve.

With this configuration, conductors can be stably connected with axial length of the sleeve being shortened.

[25] In the cable connection structure according to [24],

on an inner circumference of the sleeve, a part of each of the multiple second indents is interposed between the multiple first indents.

With this configuration, the axial length of the sleeve can be shortened.

[26] In the cable connection structure according to [24] or [25],

on an inner circumference of the sleeve, a part of each of the multiple second indents is located closer to an inner circumference connecting the deepest parts of the multiple first indents than an inner circumference connecting edge parts of the multiple first indents in the axial direction of the sleeve.

With this configuration, the axial length of the sleeve can be shortened.

[27] In the cable connection structure according to any one of [24] to [26],

each of the multiple second indents is located in a middle of an arc between a pair of adjacent first indents among the multiple first indents when viewed in the axial direction of the sleeve.

With this configuration, both of reduction in contact resistance and improvement in mechanical tensile strength can be stably achieved.

[28] In the cable connection structure according to any one of [24] to [27],

the multiple first indents are arranged at a position of n-fold rotational symmetry around a central axis of the sleeve, and

the multiple second indents are arranged at positions different from the positions of the multiple first indents by an angle of $(180/n)°$ around the central axis of the sleeve, wherein n indicates an integer of 2 or more, when viewed in the axial direction of the sleeve.

With this configuration, both of reduction in contact resistance and improvement in mechanical tensile strength can be stably achieved.

[29] A connected power cable according to another aspect of the present disclosure includes

at least one cable connection structure according to any one of [1] to [28].

With this configuration, conductors can be stably connected with axial length of the sleeve being shortened.

[30] A method of producing a cable connection structure according to yet another aspect of the present disclosure includes:

preparing a pair of power cables, each having a conductor; and

connecting the conductors of the pair of power cables using a sleeve being cylindrical,

wherein the connection of the conductors includes

forming multiple first indents recessed in radial directions of the sleeve at positions separated from each other on a first outer circumference of the sleeve, and

forming multiple second indents recessed in the radial directions of the sleeve at positions separated from each other on a second outer circumference that is different from the first outer circumference in an axial direction of the sleeve, and

in the connection of the conductors,

the multiple indents are formed by compression so that at least one indent among the multiple indents arranged along a circumferential direction of the sleeve has a depth different from depths of other indents on the outer circumference of the sleeve.

With this configuration, conductors can be stably connected with axial length of the sleeve being shortened. Contact resistance can be stably reduced, and tensile strength can be stably improved.

[Details of Embodiment of the Present Disclosure]

Next, an embodiment of the present disclosure will be described below with reference to the drawings. The present disclosure is not limited to these illustrations, but intended to be indicated by claims and encompass all the changes which fall within the meaning and scope equivalent to claims.

<One Embodiment of the Present Disclosure>

(1) Connected power cable and cable connection structure

A schematic configuration of the connected power cable 10 and the cable connection structure (cable connection part) 20 according to an embodiment of the present disclosure will be illustrated with reference to FIG. 1 to FIG. 3.
Note that the lower half of the configuration is omitted in FIG. 2 and FIG. 3. FIG. 2 and FIG. 3 illustrate the sides of the power cable 100, the sleeve 200, and filling parts 250.
As illustrated in FIG. 2, the connected power cable 10 of this embodiment includes, for example, multiple power cables 100 and at least one cable connection structure 20.
In the following, the "axial direction" of the power cable 100 or the like refers to a direction along the central axis of the power cable 100 or the like, which may be rephrased as a "longitudinal direction" of the power cable 100 or the like. The "radial direction" of the power cable 100 or the like refers to a direction perpendicular to the axial direction of the power cable 100 or the like, which may be rephrased as a "shorter direction" of the power cable 100 or the like in some cases. The "circumferential direction" of the power cable 100 or the like refers to a direction along an outer circumference of the power cable 100 or the like. The units of depth, thickness, and diameter in the present disclosure are mm.

[Power cable]

As illustrated in FIG. 1, the power cable 100 is configured, for example, as a solid insulated cable (CE cable or CV cable: Crosslinked polyethylene (PE) insulated PE or PVC sheathed cable, also referred to as XLPE cable), which is a high-voltage power transmission cable.
The power cable 100 is configured, for example, as an underwater cable (marine cable, submarine cable, etc.), and includes a conductor 110, a cable internal semiconductive layer 120, a cable insulating layer 130, a cable external semiconductive layer 140, a water absorption layer (not shown), a cable metal shield layer 150, and a cable outer circumferential structure 170 in this order from the central axis of the conductor 110 toward the outer circumference of the power cable 100. The cable outer circumferential structure 170 in the underwater cable includes, for example, an anticorrosive layer, a yarn bedding layer, an iron wire outer covering (armoring), and a yarn layer, from a region close to the cable metal shield layer 150 toward the outer circumference. Note that the cable metal shield layer 150 in the underwater cable is, for example, a metal cover.
For the sake of brevity, a layer located outside the cable metal shield layer 150 is regarded as a cable sheath 160 in the following explanation.

The conductor 110 includes, for example, multiple conductor wires 112. In each of the conductor wire layers 114, multiple conductor wires 112 are provided, for example, spirally twisted along an outer circumferential surface of a layer located inside the conductor wire layer.

The conductor wire 112 in at least one of the pair of power cables 100 has, for example, an oxide film on its outer circumference. Specifically, in this embodiment, the conductor wire 112 in both power cables 100 contains aluminum or an aluminum alloy and has an aluminum oxide film on its outer circumference, for example.

As illustrated in FIG. 2, the power cable 100 is stripped stepwise from the tip toward the opposite of the conductor 110 (the conductor 110 is subjected to so-called "stepwise stripping"). That is, the conductor 110, the cable internal semiconductive layer 120, the cable insulating layer 130, the cable external semiconductive layer 140, the cable metal shield layer 150, and the cable sheath 160 are exposed in this order from the tip toward the opposite of the conductor 110. Hereinafter, each part that has been subjected to stepwise stripping is sometimes referred to as an "exposed part". With this configuration, the power cables 100 can be connected to each other sequentially from the central axis toward the outer circumference.

As illustrated in FIG. 2, the multiple power cables 100 are provided. Among the multiple power cables 100, a pair of power cables 100 are butted against each other with the axes of their conductors 110 coinciding with each other. In the following, one power cable 100 of the pair of power cables 100 is referred to as a "first power cable 100a", and the other power cable 100 is referred to as a "second power cable 100b", in some cases.

[Cable connection structure]

As illustrated in FIG. 2, the cable connection structure 20 is configured to connect, for example, a pair of power cables 100. Specifically, the cable connection structure 20 includes, for example, the pair of power cables 100 described above, the sleeve (conductor connection tube) 200, the filling part 250, a semiconductive tape layer 260, a sleeve cover 290, an insulating cylinder (rubber connection cylinder, rubber unit, insulating unit) 300, a protective tube (metal tube) 400, and a filler 480.

(Sleeve)

As illustrated in FIG. 2 and FIG. 3, the sleeve 200 is provided, for example, to enclose the connection point between the conductors 110 so that the conductors 110 exposed from the cable insulating layers 130 of the pair of power cables 100 are connected to each other. The term "connection point (connection part)" used herein means a point (part, portion) where axes of a pair of conductors 110 are butted against each other so that tips of the pair of conductors 110 are close to each other.

In this embodiment, the sleeve 200 includes, for example, multiple indents 240. The details of the sleeve 200 will be described below.

(Filling part)

As illustrated in FIG. 2 and FIG. 3, each of the filling parts 250 is filled in each of the multiple indents 240 (multiple first indents 240a and multiple second indents 240b) on the outer circumference of the sleeve 200, for example. Accordingly, generation of unnecessary voids can be suppressed in the indents 240 of the sleeve 200. As a result, heat retention due to the voids can be suppressed.

The filling part 250 contains, for example, patty or clay. The patty and clay have shape flexibility. Accordingly, the filling part 250 can be formed to fit a complicated shape of the indent 240 in the sleeve 200. As a result, generation of the voids in the indents 240 can be stably suppressed.

(Semiconductive tape layer)

As illustrated in FIG. 2 and FIG. 3, the semiconductive tape layer 260 is provided to fill a difference in level between the outer circumference of the cable insulating layer 130 of each of the pair of power cables 100 and the outer circumference of the sleeve 200, for example. The semiconductive tape layer 260 is formed, for example, by winding a semiconductive tape around the outer circumference of the sleeve 200. Accordingly, damage of an insulating cylinder 300 caused by contact with a corner part of an aperture of the indent 240 of the sleeve 200 can be suppressed. Since the semiconductive tape layer 260 is provided, generation of an air layer outside of the sleeve 200 can be suppressed. Accordingly, heat retention due to the air layer can be suppressed.

The semiconductive tape layer 260 is provided, for example, from the outer circumference of the sleeve 200 to a position closer to the sleeve 200 than an inner circumference of the sleeve cover 290 by 0.5 mm or more and 1 mm or less, for example. Since the semiconductive tape layer 260 is provided to a position closer to the sleeve 200 than the inner circumference of the sleeve cover 290 by 0.5 mm or more, the sleeve cover 290 can be stably mounted. Accordingly, the sleeve cover 290 can be prevented from coming off. On the other hand, since the semiconductive tape layer 260 is provided to a position closer to the sleeve 200 than the inner circumference of the sleeve cover 290 by 1 mm or less, generation of an unnecessary air layer outside of the sleeve 200 can be suppressed. Accordingly, heat retention due to the air layer can be suppressed.

(Sleeve cover)

As illustrated in FIG. 2 and FIG. 3, the sleeve cover 290 is configured, for example, in a cylindrical shape and provided so as to surround the outer circumference of the sleeve 200. The sleeve cover 290 includes a locking part 292 at an end of the sleeve cover 290 in the axial direction, protruding in a radial direction of the sleeve cover 290. The locking part 292 bites into the cable insulating layer 130 which is exposed, in each of the pair of power cables 100. Accordingly, shrink-back of the cable insulating layer 130 can be suppressed in the pair of power cables 100.

(Insulating cylinder)

As illustrated in FIG. 2, the insulating cylinder 300 is configured, for example, as an insulating cylindrical member, and is provided to cover the outer circumference of the sleeve 200 (the outer circumference of the sleeve cover 290) and a part of the outer circumference of each of the pair of power cables 100.

The insulating cylinder 300 is configured, for example, as a so-called normal temperature shrinking type. That is, the insulating cylinder 300 has an elastic material molded integrally, and elastically shrinks at the normal temperature so as to come in close contact with the connection portion of the power cable 100.

Further, the insulating cylinder 300 is configured, for example, to relax an electric field around the sleeve 200 while maintaining an insulation property around the sleeve 200. Specifically, the insulating cylinder 300 includes, for example, an internal semiconductive layer 320, an insulating layer 340, a stress cone part 360, and an external semiconductive layer 380.

The internal semiconductive layer 320 is configured in a cylindrical shape to cover the outer circumference of the sleeve 200. The internal semiconductive layer 320 contains, for example, a rubber having semiconductivity. The internal semiconductive layer 320 is equipotential with the sleeve 200.

The insulating layer 340 is provided so as to cover the outer circumference of the internal semiconductive layer 320. The insulating layer 340 contains, for example, a rubber having an insulation property.

The stress cone part 360 contains a rubber having semiconductivity. The stress cone part 360 is provided in a region close to each of both ends of the insulating layer 340 in the axial direction, and has an inner circumferential surface which is conical, spreading toward a middle of the insulating layer 340 in the axial direction. A part of the inner circumferential surface of the stress cone part 360 is in contact with the cable external semiconductive layer 140 of the power cable 100 which has been subjected to stepwise stripping.

The external semiconductive layer 380 is provided so as to cover the outer circumference of the insulating layer 340. The external semiconductive layer 380 contains a rubber having semiconductivity.

With such a configuration of the insulating cylinder 300, the electric field around the sleeve 200 can be relaxed.

(Protective tube)

The protective tube 400 is provided to cover the outer circumference of the insulating cylinder 300 and a part of the outer circumference of each of the pair of power cables 100, and is configured to protect them. The protective tube 400 is composed of metal, for example. Examples of the metal constituting the protective tube 400 include copper, and lead.

Gaps between each of both ends of the protective tube 400 in the axial direction and the power cable 100 are sealed with a predetermined sealant (not shown).

(Filler)

**In** the protective tube 400, the filler 480 is filled between the insulating cylinder 300 and the protective tube 400. An example of the filler 480 is a so-called waterproof admixture. The filler can suppress infiltration of moisture into the protective tube 400.

(2) Sleeve

The sleeve 200 according to an embodiment of the present disclosure will be explained with reference to FIG. 4A and FIG. 4B. Note that the conductor 110 is omitted in FIG. 4A and FIG. 4B.

As illustrated in FIG. 4A and FIG. 4B, the sleeve 200 is configured, for example, as a cylindrical metallic member having a hollow part (numeral not shown). Exposed parts of the pair of conductors 110 including a connection point are inserted in the hollow part of the sleeve 200. An example of metal for the sleeve 200 is aluminum.

The sleeve 200 includes, for example, a partition wall 280 in the middle of the sleeve 200 in the axial direction to block the hollow part. The partition wall can suppress the propagation of water through the conductor 110.

The sleeve 200 of this embodiment includes, for example, multiple indents 240 recessed in the radial directions of the sleeve 200. That is, the indents 240, for example, locally compress the conductor 110 in the radial directions of the sleeve 200. With such a configuration, the indents 240 break at least a part of the oxide film on the conductor wire 112. Note that the portions other than the indents 240 are not recessed in the radial directions of the sleeve 200 compared to the indents 240 and are non-compressive.

In this embodiment, the multiple indents 240 include, for example, the multiple first indents 240a and the multiple second indents 240b.

The multiple first indents 240a are recessed in the radial directions of the sleeve 200, for example, at positions separated from each other on the first outer circumference C1 of the sleeve 200. The term "first outer circumference C1" used herein refers to, for example, an outer circumference of a cross-section of the sleeve 200, orthogonal to the axial direction at a predetermined position of the sleeve 200 in the axial direction. On the first outer circumference C1 of the sleeve 200, indentation centers (the deepest points in the radial directions of the sleeve 200) of the multiple first indents 240a recessed in the radial directions of the sleeve 200 are arranged away from each other. The indentation centers of the multiple first indents 240a are, for example, evenly distributed on the first outer circumference C1.

The multiple second indents 240b are recessed in the radial directions of the sleeve 200, for example, at positions separated from each other on a second outer circumference C2 of the sleeve 200 that is different from the first outer circumference C1 of the sleeve 200 in the axial direction of the sleeve 200. The term "second outer circumference C2" used herein refers to an outer circumference of a cross-section orthogonal to the axial direction of the sleeve 200, for example, at a position that is different from the first outer circumference C1 of the sleeve 200 in the axial direction of the sleeve 200. On the second outer circumference C2 of the sleeve 200, indentation centers (the deepest points in the radial directions of the sleeve 200) of the multiple second indents 240b recessed in the radial directions of the sleeve 200 are arranged away from each other. The indentation centers of the multiple second indents 240b are, for example, evenly distributed on the second outer circumference C2.

In this embodiment, each of the multiple first indents 240a and the multiple second indents 240b has a convex surface 242 protruding toward the central axis of the sleeve 200, on an inner circumference of the sleeve 200, for example. When viewed from the outer circumference of the sleeve 200, the shape of aperture of each of the first indents 240a and the second indents 240b is, for example, circular. The convex surface 242 of each of the multiple first indents 240a and the multiple second indents 240b on the inner circumference of the sleeve 200 is curved in a convex spherical shape protruding toward the central axis of the sleeve 200. Accordingly, breakage of the sleeve 200 due to the shape of the convex surface 242 can be suppressed. The conductor 110 is smoothly squeezed with the convex spherical surfaces 242 as described above, so that breakage of the conductor wire 112 can be suppressed. Further, the convex spherical surfaces 242 contact with a large number of conductor wires 112, so that only the oxide films of the large number of conductor wires 112 can be broken.

In this embodiment, on the inner circumference of the sleeve 200, for example, a center C of curvature of each of the multiple first indents 240a and the multiple second indents 240b is arranged at a position closer to the central axis of the sleeve 200 than the circumscribed circle of the sleeve 200, as illustrated in FIG. 4A. Accordingly, the convex spherical surface 242 can be brought into contact with a large number of conductor wires 112 over a wide range of the convex surface 242. By increasing the number of contact points in this way, the oxide films on a large number of conductor wires 112 can be stably broken. As a result, the contact resistance between the sleeve 200 and the conductor 110 can be stably reduced.

In this embodiment, each of the multiple first indents 240a and the multiple second indents 240b does not radially penetrate through the sleeve 200, for example. In other words, the sleeve 200 does not have a through hole, even though the indents 240 are pressed therein. Since the indent 240 does not penetrate through the sleeve as described above, breakage of the sleeve 200 itself, originating from the indent 240, can be suppressed. Accordingly, tensile strength by the sleeve 200 can be maintained.

In this embodiment, the multiple second indents 240b are provided, for example, at positions different from positions of the multiple first indents 240a in a circumferential direction of the sleeve 200.

In this embodiment, on the inner circumference of the sleeve 200, for example, a part of each of the multiple second indents 240b is interposed between the multiple first indents 240a, as illustrated in FIG. 4B. In other words, a part of each of the multiple first indents 240a is interposed between the multiple second indents 240b. Among the cross-sections orthogonal to the axial direction of the sleeve 200, at least one cross-section includes a part of the convex surface 242 of the first indent 240a and a part of the convex surface 242 of the second indent 240b.

In this embodiment, on the inner circumference of the sleeve 200, a part of each of the multiple second indents 240b is located, for example, closer to an inner circumference connecting the deepest parts of the multiple first indents 240a than an inner circumference connecting edge parts of the multiple first indents 240a in the axial direction of the sleeve 200, as illustrated in FIG. 4B. In other words, on the inner circumference of the sleeve 200, a part of each of the multiple first indents 240a is located, for example, closer to an inner circumference connecting the deepest parts of the multiple second indents 240b than an inner circumference connecting edge parts of the multiple second indents 240b in the axial direction of the sleeve 200 (a thick arrow in FIG. 4B).

With such a configuration, the axial length of the sleeve 200 can be shortened while ensuring the required number of the indents 240.

In this embodiment, each of the multiple second indents 240b is located, for example, in a middle of an arc between a pair of adjacent first indents 240a among the multiple first indents 240a, when viewed in the axial direction of the sleeve, as illustrated in FIG. 4A. The multiple second indents 240b can reliably compress the conductor wire 112 different from the conductor wire 112 which the multiple first indents 240a compress. In addition, the irregularities on the inner circumferential surface of the sleeve 200 can be formed over the entire inner circumference of the sleeve 200. That is, it is possible to prevent the irregularities on the inner circumferential surface of the sleeve 200 from being smoothened due to the continuous arrangement of the indents 240.

Specifically, the multiple first indents 240a are arranged at positions of n-fold rotational symmetry around the central axis of the sleeve 200, wherein n is an integer of 2 or more. Here, n = 4, for example. In this case, the multiple second indents 240b are arranged, for example, at positions different from the positions of the multiple first indents 240a by an angle of $(180/n)°$ around the central axis of the sleeve 200, when viewed in the axial direction of the sleeve 200. Here, the second indent 240b is arranged, for example, at a position different from a position of the first indent 240a by 45°. As described below, since the depths D of the multiple indents 240 are different from each other, the shape of the sleeve 200 is not necessarily rotationally symmetric around the central axis of the sleeve 200.

As illustrated in FIG. 4B, in this embodiment, the multiple first indents 240a on the first outer circumference C1 and the multiple second indents 240b on the second outer circumference C2 are, for example, provided alternately in the axial direction of the sleeve 200. On each of both sides across the middle (partition wall 280) of the sleeve 200 in the axial direction, the first outer circumferences C1 and the second outer circumferences C2 are arranged alternately so as to be evenly spaced from each other. Here, in the sleeve 200, two first outer circumferences C1 and two second outer circumference C2 are provided in each of the regions respectively corresponding to the first power cable 100a and the second power cable 100b.

With the above-described configuration, the conductor 110 can be reliably compressed over the entire conductor 110, and the conductor 110 can be stably connected. As a result, both of reduction in contact resistance and improvement in tensile strength can be stably achieved.

As illustrated in FIG. 4A and FIG. 4B, each indent 240 in the sleeve 200 has a depth D on the outer circumference of the sleeve 200. The term "depth D of the indent 240" used herein means the depth of the indent 240 from the circumscribed circle of the sleeve 200 toward the central axis of the sleeve 200.

In this embodiment, for example, at least one indent 240 among the multiple indents 240 arranged along the circumferential direction of the sleeve 200 has a depth D different from depths D of other indents 240 on the outer circumference of the sleeve 200, as illustrated in FIG. 4A. By intentionally making the depth D of at least one indent 240 different from the depths of other indents 240 in the circumferential direction of the sleeve 200, the conductor 110 can be compressed by the sleeve 200 in a complicated shape in the circumferential direction of the sleeve 200.

By compressing the conductor 110 in a complicated shape in the circumferential direction of the sleeve 200, the oxide films on the different conductor wires 112 can be reliably broken by the multiple indents 240 having different depths D. As a result, the contact resistance between the sleeve 200 and the conductor 110 can be stably reduced.

By compressing the conductor 110 in the complicated shape in the circumferential direction of the sleeve 200, the conductor 110 can be meandered within the sleeve 200. Accordingly, an anchor effect of the indent 240 of the sleeve 200 on the conductor 110 can be improved. As a result, tensile strength by the sleeve 200 can be stably improved.

In this embodiment, for example, on the outer circumference of the sleeve 200, depths D of the multiple indents 240 arranged along the circumferential direction of the sleeve 200 satisfy the following formula (1):

$$0.02 \leqq (Dcmax - Dcmin)/Dcavg \leqq 0.8 \quad \cdots \quad (1)$$

wherein Dcmax, Dcmin, and Dcavg respectively indicate the maximum, minimum, and average values of the depths D of the multiple indents 240 arranged along the circumferential direction of the sleeve 200.

With $(Dcmax - Dcmin)/Dcavg \geqq 0.02$, the conductor 110 can be compressed in a complicated shape while the depths D of the indents 240 are made clearly different from each other in the circumferential direction of the sleeve 200. Accordingly, the effect to reduce contact resistance and the effect to improve tensile strength described above can be stably obtained. On the other hand, with $(Dcmax - Dcmin)/Dcavg \leqq 0.8$, it is possible to suppress reduction in possibility to obtain the effect to reduce contact resistance and the effect to improve tensile strength described above due to excessive variation in the depths D of the indents 240 in the circumferential direction of the sleeve 200.

In this embodiment, for example, at least one indent 240 among the multiple indents 240 arranged along the axial direction of the sleeve 200 has a depth D different from depths D of other indents on the outer circumference of the sleeve 200, as illustrated in FIG. 4B. By intentionally making the depth D of at least one indent 240 different from the depths of other indents 240 in the axial direction of the sleeve 200, the conductor 110 can be compressed by the sleeve 200 in a complicated shape in the axial direction of the sleeve 200. Accordingly, the effect to reduce contact resistance and the effect to improve tensile strength described above can be stably obtained, similarly to the effect obtained by making the depths D of the indents 240 different in the circumferential direction of the sleeve 200.

In this embodiment, for example, on the outer circumference of the sleeve 200, the depths D of the multiple indents 240 arranged along the axial direction of the sleeve 200 satisfy the following formula (2):

$$0.02 \leqq (Damax - Damin)/Daavg \leqq 0.8 \quad \cdots \quad (2)$$

wherein Damax, Damin, and Daavg respectively indicate the maximum, minimum, and average values of the depths D of the multiple indents 240 arranged along the axial direction of the sleeve 200.

With (Damax - Damin)/Daavg $\geqq$ 0.02, the conductor 110 can be compressed in a complicated shape while the depths D of the indents 240 are made clearly different from each other in the axial direction of the sleeve 200. Accordingly, the effect to reduce contact resistance and the effect to improve tensile strength described above can be stably obtained. On the other hand, with (Damax - Damin)/Daavg $\leqq$ 0.8, it is possible to suppress reduction in possibility to obtain the effects to reduce contact resistance and the effect to improve tensile strength described above due to excessive variation in the depths D of the indents 240 in the axial direction of the sleeve 200.

In this embodiment, for example, at least one indent 240 among all the indents 240 provided on the sleeve 200 has a depth D different from depths D of other indents 240 on the outer circumference of the sleeve 200, as illustrated in FIG. 4A and FIG. 4B. By intentionally making the depth D of at least one indent 240 different from the depths D of other indents 240 in the entirety of the sleeve 200, the conductor 110 can be compressed by the sleeve 200 in a complicated shape in the entirety of the sleeve 200. Accordingly, the effect to reduce contact resistance and the effect to improve tensile strength described above can be stably obtained, similarly to the effect obtained by making the depths D of the indents 240 different in the circumferential direction and axial direction of the sleeve 200.

In this embodiment, for example, on the outer circumference of the sleeve 200, the depths D of all the multiple indents 240 satisfy the following formula (3):

$$0.01 \leqq \sigma/Davg \leqq 0.4 \quad \cdots \quad (3)$$

wherein $\sigma$ and Davg respectively indicate the standard deviation and average values of the depths D of all the indents 240.

With $\sigma$/Davg $\geqq$ 0.01, the conductor 110 can be compressed in a complicated shape while the depths D of the indents 240 are made clearly different from each other in the entirety of the sleeve 200. Accordingly, the effect to reduce contact resistance and the effect to improve tensile strength described above can be stably obtained. On the other hand, with $\sigma$/Davg $\leqq$ 0.4, it is possible to suppress reduction in possibility to obtain the effects to reduce contact resistance and the effect to improve tensile strength described above due to excessive variation in the depths D of the indents 240 in the entirety of the sleeve 200.

In this embodiment, the multiple first indents 240a and the multiple second indents 240b may have random depths D. By making the depths D of the indents 240 randomly different, the effect to reduce contact resistance and the effect to improve tensile strength described above can be stably obtained.

In this embodiment, although the depths D of the multiple indents 240 are different as described above, each of the multiple first indents 240a and the multiple second indents 240b is not in contact with another indent 240 on the inner circumference of the sleeve 200. Accordingly, in a first indent step S22 and a second indent step S24 described below, interference of compression pins can be suppressed when compressing the multiple indents 240 at the same time.

In this embodiment, as described above, since the depths D of the multiple indents 240 are different, the sleeve 200 has a point-asymmetric shape with respect to the central axis of the sleeve 200 on a cross-section orthogonal to the central axis of the sleeve 200, for example. Accordingly, the conductor 110 can be compressed in a complicated shape on a cross-section orthogonal to the central axis of the sleeve 200. As a result, contact resistance can be stably reduced, and tensile strength can be stably improved.

In this embodiment, since the depths D of the multiple indents 240 are different as described above, the sleeve 200 has a rotationally asymmetric shape around the central axis of the sleeve 200 on a cross-section orthogonal to the central axis of the sleeve 200, for example. Accordingly, the conductor 110 can be compressed in a complicated shape independently of the twist direction and twist pitch of the conductor wires 112. As a result, tensile strength can be stably improved. Further, the oxide films on the conductor wires 112 which are different from each other were broken by the multiple indents 240. As a result, the contact resistance can be stably reduced.

In this embodiment, since the depth D of the multiple indents 240 are different as described above, the sleeve 200 has a plane-asymmetric shape across the cross-section orthogonal to the central axis of the sleeve 200 in a middle of the sleeve 200 in the axial direction, for example. Accordingly, the conductor 110 can be compressed in a complicated shape in the axial direction of the sleeve 200. As a result, contact resistance can be stably reduced, and tensile strength can be stably improved.

As illustrated in FIG. 4A and FIG. 4B, in this embodiment, for example, a thickness Ti at each of the multiple first indents 240a and the multiple second indents 240b is thinner than thicknesses Tn at the positions other than the multiple first indents 240a and the multiple second indents 240b. The indents 240 of the sleeve 200 are interposed between the conductor wires 112 of the conductor 110, so that the thickness Ti at the indent 240 is relatively thinner. In other words, the relatively thinner thickness Ti at the indent 240 is a signature of the indent 240 having been reliably pressed in the conductor 110. Accordingly, contact resistance can be stably reduced, and tensile strength can be stably improved.

In this embodiment, the thickness of the sleeve 200 satisfies, for example, the following formula (4):

$$0.1 \leqq \mathrm{Ti/Tn} < 1 \cdots (4)$$

wherein Ti indicates a thickness at each of the multiple first indents 240a and the multiple second indents 240b, and Tn indicates a thickness at a position other than the multiple first indents 240a and the multiple second indents 240b.

With Ti/Tn $\geqq$ 0.1, breakage of the sleeve 200 itself, originating from the relatively thinner indent 240 can be suppressed when the indents 240 are formed by compression. On the other hand, with Ti/Tn < 1, the indents 240 can be reliably pressed in the conductor 110. Accordingly, both of the effect to reduce contact resistance and the effect to improve tensile strength described above can be stably obtained.

In this embodiment, the sleeve 200 satisfies the following formula (5):

$$0.1 \leqq \mathrm{D/\Phi} \leqq 0.4 \cdots (5)$$

wherein D indicates a depth of each of the multiple first indents 240a and the multiple second indents 240b on the outer circumference of the sleeve 200, and $\Phi$ indicates a diameter of circumscribed circle of the sleeve 200.

With D/$\Phi$ $\geqq$ 0.1, the conductor 110 can be reliably compressed by the multiple indents 240. Accordingly, contact resistance can be stably reduced, and tensile strength can be stably improved. Meanwhile, with D/$\Phi$ $\leqq$ 0.4, it is possible to suppress a reduction in tensile strength due to excessively pressed indents 240.

In this embodiment, on the outer circumference of the sleeve 200, each of the multiple first indents 240a and the multiple second indents 240b satisfies, for example, the following formula (6):

$$0.1 \leqq \mathrm{D/A} \leqq 0.4 \cdots (6)$$

wherein D and A respectively indicate a depth and a diameter of aperture of each of the multiple first indents 240a and the multiple second indents 240b on the outer circumference of the sleeve 200.

With D/A $\geqq$ 0.1, the conductor 110 can be reliably compressed by the multiple indents 240. Accordingly, contact resistance can be stably reduced, and tensile strength can be stably improved. Meanwhile, with D/A $\leqq$ 0.4, it is possible to suppress a reduction in tensile strength due to excessively pressed indents 240.

In this embodiment, the sleeve 200 satisfies the following formula (7):

$$0.2 \leqq \mathrm{A/\Phi} \leqq 0.5 \cdots (7)$$

wherein A indicates a diameter of aperture of each of the multiple first indents 240a and the multiple second indents 240b on the outer circumference of the sleeve 200, and $\Phi$ indicates a diameter of circumscribed circle of the sleeve 200.

With A/$\Phi$ $\geqq$ 0.2, a predetermined number of conductor wires 112 can be reliably compressed at each of the indents 240. Accordingly, contact resistance can be stably reduced, and tensile strength can be stably improved. Meanwhile, with A/$\Phi$ $\leqq$ 0.5, contact between the multiple indents 240 on the inner circumference of the sleeve 200 can be suppressed.

(3) Method of producing cable connection structure (Method of producing connected power cable, Method of connecting cables)

Next, a method of producing a cable connection structure according to this embodiment will be described with reference to FIG. 1 to FIG. 4B.

The method of producing the cable connection structure 20 of this embodiment includes, for example, a preparation step S10, a conductor connection step S20, an insulating cylinder arrangement step S30, a protective tube arrangement step S40, and a filling step S50.

(S10: Preparation step)

First, a pair of power cables 100, a sleeve 200, a sleeve cover 290, an insulating cylinder 300, and a protective tube 400 that constitute a cable connection structure 20 are prepared.

A half-split pipe (not shown) is inserted in the hollow part of the insulating cylinder 300 in advance, for example, in a factory. Accordingly, a diameter of the insulating cylinder 300 is expanded in advance.

Next, each of the pair of power cables 100 is stripped stepwise in the axial direction from its one end, for example, at a laying site of the power cable 100. Accordingly, the conductor 110, the cable insulating layer 130, the cable external semiconductive layer 140, and the cable sheath 160 are exposed in this order from the tip of the power cable 100.

After each of members constituting the cable connection structure 20 is prepared, the power cable 100 is inserted into each of the insulating cylinder 300 and the protective tube 400, and each of the insulating cylinder 300 and the protective tube 400 is moved to a predetermined position away from a tip of the power cable 100.

(S20: Conductor connection step)

After the preparation step S10 is completed, the pair of power cables 100 are butted against each other in the sleeve 200 with the axes of their conductors 110 coinciding with each other. After the pair of power cables 100 are butted against each other, the conductors 110 of the pair of power cables 100 are connected to each other by compressing the sleeve 200. In such a situation, the compression pins are pressed into the sleeve 200, so that indents 240 are formed in the sleeve 200. Forming the indents 240 by pressing the compression pins is hereinafter also referred to as "forming the indents 240 by compression".

The conductor connection step S20 of this embodiment includes, for example, a first indent step S22 and a second indent step S24.

In the first indent step S22, the multiple first indents 240a recessed in the radial directions of the sleeve 200 are formed at positions separated from each other on the first outer circumference C1 of the sleeve 200.

In the second indent step S24, the multiple second indents 240b recessed in the radial directions of the sleeve 200 are formed at the positions separated from each other on the second outer circumference C2 of the sleeve 200 that is different from the first outer circumference C1 of the sleeve 200 in the axial direction of the sleeve 200.

In such a situation, in this embodiment, the convex surface 242 of each of the multiple first indents 240a and the multiple second indents 240b on the inner circumference of the sleeve 200 is curved in a convex spherical shape protruding toward the central axis of the sleeve 200. On the inner circumference of the sleeve 200, a center C of curvature of each of the multiple first indents 240a and the multiple second indents 240b is arranged at a position closer to the central axis of the sleeve 200 than the circumscribed circle of the sleeve 200.

In such a situation, in this embodiment, each of the multiple first indents 240a and the multiple second indents 240b is made not to radially penetrate through the sleeve 200.

In such a situation, in this embodiment, the multiple second indents 240b are formed at positions different from the positions of the multiple first indents 240a in the circumferential direction of the sleeve 200. On the inner circumference of the sleeve 200, a part of each of the multiple second indents 240b is interposed between the multiple first indents 240a. On the inner circumference of the sleeve 200, a part of each of the multiple second indents 240b is located closer to an inner circumference connecting the deepest parts of the multiple first indents 240a than an inner circumference connecting edge parts of the multiple first indents 240a in the axial direction of the sleeve 200.

In this embodiment, with respect to the order of the steps including the first indent step S22 and the second indent step S24, any of the following four methods may be used, for example.

For example, the indents 240 may be formed on each of the outer circumferences, sequentially from the outer circumference closer to the middle of the sleeve 200 toward the outer circumference farther from the middle of the sleeve 200 in the axial direction. Accordingly, an elongation of the conductor 110 due to the compression of the indents 240 can be allowed to extend outwardly in the axial direction of the sleeve 200.

Alternatively, for example, the indents 240 may be formed on each of the outer circumferences, sequentially from the outer circumference farther from the middle of the sleeve 200 toward the outer circumference closer to the middle of the sleeve 200 in the axial direction. Accordingly, formation of the void in the middle of the sleeve 200 in the axial direction can be suppressed.

Alternatively, for example, after all of the first indents 240a are formed by compression, all of the second indents 240b may be formed by compression. That is, after the first indent step S22 is performed sequentially at different positions in the axial direction of the sleeve 200, the second indent step S24 may be performed sequentially at different positions in the axial direction of the sleeve 200. Accordingly, it is sufficient to perform an operation of switching compression directions of the indents 240 only once. As a result, the step time can be shortened.

Alternatively, for example, all of the indents 240 may be formed by compression at the same time. That is, the first indent step S22 and the second indent step S24 may be performed at the same time. Accordingly, the step time can be further shortened.

In such a situation, in this embodiment, the multiple indents 240 are formed by compression so that at least one indent 240 among the multiple indents 240 arranged along a circumferential direction of the sleeve 200 has a depth D different from depths D of other indents 240 on the outer circumference of the sleeve 200. Further, on the outer circumference of the sleeve 200, the multiple indents 240 are formed by compression so that the depths D of the multiple indents 240 arranged along the circumferential direction of the sleeve 200 satisfy the above-described formula (1).

In such a situation, in this embodiment, the multiple indents 240 are formed by compression so that at least one indent 240 among the multiple indents 240 arranged along an axial direction of the sleeve 200 has a depth D different from depths D of other indents on the outer circumference of the sleeve 200. Further, on the outer circumference of the sleeve 200, the multiple indents 240 are formed by compression so that the depth D of the multiple indents 240, arranged along the axial direction of the sleeve 200, satisfies the above-described formula (2).

In such a situation, in this embodiment, the multiple indents 240 are formed by compression so that at least one indent 240 among all the multiple indents 240 provided on the sleeve 200 has a depth D different from depths D of other indents 240 on the outer circumference of the sleeve 200. Further, on the outer circumference of the sleeve 200, the multiple indents 240 are formed by compression so that the depths D of all the indents 240 satisfy the above-described formula (3).

In such a situation, in this embodiment, each of the multiple first indents 240a and the multiple second indents 240b is not allowed to be in contact with another indent 240 on the inner circumference of the sleeve 200.

In such a situation, in this embodiment, the thickness Ti at each of the multiple first indents 240a and the multiple second indents 240b is made thinner than the thicknesses Tn at the positions other than the multiple first indents 240a and the multiple second indents 240b. Further, the multiple first indents 240a and the multiple second indents 240b are formed by compression so that the thickness of the sleeve 200 satisfies the above-described formula (4).

In such a situation, in this embodiment, the multiple first indents 240a and the multiple second indents 240b are formed by compression so that the sleeve 200 satisfies the above-described formula (5). On the outer circumference of the sleeve 200, the multiple first indents 240a and the multiple second indents 240b are formed by compression so that each of the multiple first indents 240a and the multiple second indents 240b satisfies the above-described formula (6). Further, the multiple first indents 240a and the multiple second indents 240b are formed by compression so that the sleeve 200 satisfies the above-described formula (7).

After all the indents 240 are formed on the sleeve 200, the inside of each of the multiple indents 240 (the multiple first indents 240a and the multiple second indents 240b) on the outer circumference of the sleeve 200 is filled with the filling part 250.

After the filling part 250 is filled, a semiconductive tape layer 260 is formed to fill a difference in level between the outer circumference of the cable insulating layer 130 of each of the pair of power cables 100 and the outer circumference of the sleeve 200. In such a situation, the semiconductive tape layer 260 is formed from the outer circumference of the sleeve 200 to a position closer to the sleeve 200 than the inner circumference of the sleeve cover 290 by 0.5 mm or more and 1 mm or less.

After the semiconductive tape layer 260 is formed, the sleeve cover 290 is placed so as to cover the outer circumference of the sleeve 200.

(S30: Insulating cylinder arrangement step)

After the conductor connection step S20 is completed, the insulating cylinder 300 is arranged so as to cover the outer circumference of the sleeve 200 and a part of the outer circumference of each of the pair of power cables 100. Specifically, the insulating cylinder 300 whose diameter is expanded with the half-split pipe is moved to a position at which the insulating cylinder 300 overlaps the sleeve 200. After the insulating cylinder 300 is arranged at a predetermined position, the half-split pipe is gradually removed to reduce the diameter of the insulating cylinder 300 along the axial direction.

(S40: Protective tube arrangement step)

After the insulating cylinder 300 is arranged, the protective tube 400 is arranged to cover the outer circumference of the insulating cylinder 300 and a part of the outer circumference of each of the pair of power cables 100. After the protective tube 400 is arranged, each of both ends of the protective tube 400 in the axial direction is sealed.

(S50: Filler filling step)

After the protective tube arrangement step S40 is completed, the filler 480 is injected into the protective tube 400 through an inlet of the protective tube 400, and the filler 480 is filled between the insulating cylinder 300 and the protective tube 400. After the filler 480 is filled, the filler 480 is cured under a predetermined condition.
As described above, the cable connection structure 20 of this embodiment is produced.

(4) Effects according to this embodiment

According to this embodiment, one or more effects described below are achieved.

(a) **In** the sleeve 200 of this embodiment, the multiple second indents 240b are provided at positions different from the positions of the multiple first indents 240a in the circumferential direction of the sleeve 200. Accordingly, on the inner circumference of the sleeve 200, a part of each of the multiple second indents 240b can be interposed between the multiple first indents 240a. With this configuration, the axial length of the sleeve 200 can be shortened.

With the above-described configuration, the irregularities on the inner circumferential surface of the sleeve 200 can be sufficiently formed while ensuring the required number of the indents 240. **In** other words, the reduction in the contact area between the sleeve 920 and the conductor 110 due to a continuous arrangement of the indent 240 can be suppressed.
As a result, conductors 110 can be stably connected with axial length of the sleeve 200 being shortened.
(b) **In** this embodiment, the multiple second indents 240b compress conductor wires 112 different from the conductor wires 112 which the multiple first indents 240a compress. That is, the first indents 240a and the second indents 240b can break the oxide films on the conductor wires 112 that are different from each other. As a result, the contact resistance between the sleeve 200 and the conductor 110 can be stably reduced.
**In** addition, since the multiple second indents 240b are formed at positions different from the positions of the multiple first indents 240a in the circumferential direction of the sleeve 200, complicated and intricate irregularities can be formed in the sleeve 200. Accordingly, a force of the sleeve 200 to detain the conductor 110 can be improved.
As a result, both of reduction in contact resistance and improvement in tensile strength can be achieved.

<Other embodiments of the present disclosure>

Although the embodiment of the present disclosure has been specifically described, the present disclosure is not limited to the embodiment described above, and various modifications can be made without departing from the gist of the present disclosure.
**In** the above-described embodiments, as an example, an explanation has been given for a case where the power cable 100 is configured as an underwater cable. However, the power cable 100 may be configured as an overland cable or an underground cable.
In the above-described embodiment, an explanation has been given for a case where the conductor wire 112 contains aluminum or an aluminum alloy, and has the aluminum oxide film on its outer circumference. However, the conductor 110 may be configured as a so-called wire insulated conductor. That is, the conductor wire 112 may contain, for example, copper or a copper alloy, and may have an insulating film on its outer circumference.
In the above-described embodiment, the conductor 110 has been illustrated to have a conductor wire layer 114 being cylindrical. However, the conductor 110 may be a so-called split conductor. That is, the conductor wire layer 114 may be, for example, a deformed layer such as a fan-shaped layer.
In the above-described embodiment, an explanation has been given for a case where the conductor wires 112 in both power cables 100 have the oxide films or the insulating films on their outer circumferences. However, the present disclosure is not limited to the case. It is sufficient that the conductor wire 112 in at least one of the pair of power cables 100 has the oxide film or the insulating film on its outer circumference.
Although the above-described embodiment does not mention an application of a compound, the application of the compound in the present disclosure is not limited. For example, between the inner circumferential surface of the sleeve 200 and the outer circumferential surface of the conductor 110 may be provided a mineral-containing compound. Accordingly, the electrical resistance can be stably reduced.
In the above-described embodiment, an explanation has been given for a case where the indents 240 are arranged at a position of 4-fold rotational symmetry around the central axis of the sleeve 200. However, the indents 240 may be arranged at a position of 2-, 3-, 5-fold or more rotational symmetry around the central axis of the sleeve 200, for example. As described above, the rotational symmetry of the positions of the indents 240 in the sleeve 200 can be appropriately changed.

In the above-described embodiment, an explanation has been given for a case where the cable connection structure 20 includes an integrally molded insulating cylinder 300 composed of a rubber. However, the present disclosure is not limited to the case. The cable connection structure 20 may be configured as a so-called factory joint, and the internal semiconductive layer 320, the insulating layer 340, the stress cone part 360, and the external semiconductive layer 380 may be individually configured.

In the above-described embodiment, an explanation has been given for a single cable connection structure 20 of the connected power cable 10. However, the connected power cable 10 may include multiple cable connection structures 20.

[Examples]

Next, examples according to the present disclosure will be described. These examples are illustrative of the present disclosure, and the present disclosure is not limited by these examples.

(1) Production of cable connection structure

Cable connection structures of samples A1, A2, B, and C were produced as follows.

(Samples A1, A2, and B)

As the cable connection structures of the samples A1, A2 and B, the cable connection structures of the above-described embodiment were produced. For the samples A1, A2, and B, the depth of each indent was made different as shown in Table 1 below.

Other conditions in the samples A1, A2, and B are as follows:

·Material of conductor: Aluminum

·Outer diameter of conductor before compression: 42 mm

·Outer diameter of sleeve (diameter of circumscribed circle of sleeve): 62 mm

·Axial length of sleeve: 228 mm

·Diameter of aperture of each indent: 20 mm

(Sample C)

For the cable connection structure of the sample C, a sleeve similar to the sleeves in the above-described samples A1, A2 and B before compression was used. In the sample C, however, the sleeve was compressed so that its cross-section was hexagonal without forming indents in the sleeve. The configuration of the sample C excluding the sleeve was the same as those of the samples A1, A2, and B.

(2) Evaluation

(Resistance)

According to a four-terminal method using a DC conductor resistance meter, a resistance of the cable connection structure of each sample was measured. Specifically, in each sample, two terminals were connected to a conductor of a first power cable and two terminals were connected to a conductor of a second power cable. In such a state, the resistance of the cable connection structure of each sample was measured under conditions of direct current of 100 A and a predetermined temperature. Then, the resistance measured under the predetermined temperature condition was converted to the resistance under a temperature condition of 20°C.

As for results of measurement, the resistance of more than 0.026 $\Omega$/km is indicated as "C", the resistance of more than 0.025 $\Omega$/km and 0.026 $\Omega$/km or less is indicated as "B", and the resistance of 0.025 $\Omega$/km or less is indicated as "A".

(Tensile strength)

Using a tensile tester, a tensile strength of the cable connection structure of each sample was measured.

Specifically, the second end opposite to the first end compressed by the sleeve in the conductor of the first power cable, and the second end opposite to the first end compressed by the sleeve in the conductor of the second power cable in each sample were individually fixed to the tensile tester. Under such a circumstance, the conductor of the first power cable and the conductor of the second power cable were stretched to apply a tensile load to the cable connection structure. As a result, the tensile strength was measured as a load until the cable connection structure of each sample was broken due to the pull-out of the conductor from the sleeve, the breakage of the conductor wire, or the like.

As for results of measurement, the tensile strength of less than 60 kN is indicated as "C", the tensile strength of 60 kN or more and less than 80 kN is indicated as "B", and the tensile strength of 80 kN or more is indicated as "A".

(3) Results

The results of the evaluation of the cable connection structures of the samples A1, A2, B, and C are listed in Table 1 below.

[Table 1]

| | | | Sample A1 | Sample A2 | Sample B | Sample C |
|---|---|---|---|---|---|---|
| | | | Indent compression | Indent compression | Indent compression | Hexagonal compression |
| Cross-sectional area of conductor | | mm² | 1100 | 1100 | 1100 | 1100 |
| Number of first indents | | | 16 | 16 | 16 | |
| Number of second indents | | | 16 | 16 | 16 | |
| Depth of indent | Circumferential direction | (Dcmax-Dcmin)/Dcavg | - | 0.10 | 0.12 | 0.95 | |
| | Axial direction | (Damax-Damin)/Daavg | - | 0.21 | 0.22 | 1.29 | |
| | Entirety | Davg | mm | 14.9 | 14.7 | 12.5 | |
| | | σ | - | 0.97 | 0.99 | 5.20 | |
| | | σ/Davg | - | 0.07 | 0.07 | 0.42 | |
| Resistance | | Ω/km | A | A | B | C |
| Tensile strength | | kN | A | A | B | C |

(Sample C)

The sample B, in which hexagonal compression was applied to the sleeve, had a resistance and a tensile strength indicated as C.

In the sample C, the sleeve was compressed with six planes, resulting in insufficiently compressed sleeve. For this reason, it is considered that the sample C does not have a sufficiently increased tensile strength. In the sample C, the oxide film on the conductor wire was not broken in some portions. For this reason, it is considered that the sample C has an increased resistance. Therefore, in order to reduce the resistance and improve the tensile strength in the sample C, it is necessary to increase the axial length of the sleeve. However, it is difficult to increase the axial length of the sleeve due to the restriction on the total length of the cable connection structure.

(Samples A1, A2, and B)

In contrast, the samples A1, A2, and B, in which the first and second indents were formed in the sleeve as in the above-described embodiment, had the resistance and the tensile strength indicated as A or B.

In the samples A1, A2, and B, the multiple second indents were formed at positions different from the positions of the multiple first indents in the circumferential direction of the sleeve. As a result, in the samples A1, A2, and B, it is confirmed that the conductors can be stably connected with axial length of the sleeve being shortened.

(Comparison of sample B with samples A1 and A2)

In the sample B, the indents in the sleeve did not satisfy formulas (1) to (3) as described below.

$$(Dcmax - Dcmin)/Dcavg > 0.8$$

$$(Damax - Damin)/Daavg > 0.8$$

$$\sigma/Davg > 0.4$$

The sample B had the resistance and the tensile strength indicated as B.

In the sample B, it is considered that the effect to reduce contact resistance and the effect to improve tensile strength were not sufficiently obtained due to excessive variation in the depths D of the indents in the circumferential direction, in the axial direction, and in the entirety of the sleeve.

In contrast, in the samples A1 and A2, the indents in the sleeve satisfy the formulas (1) to (3):

$$0.02 \leqq (Dcmax - Dcmin)/Dcavg \leqq 0.8 \cdots (1)$$

$$0.02 \leqq (Damax - Damin)/Daavg \leqq 0.8 \cdots (2)$$

$$0.01 \leqq \sigma/Davg \leqq 0.4 \cdots (3)$$

The samples A1 and A2 had the resistance and the tensile strength better than those of the sample B.

The result of the samples A1 and A2 confirmed that the effect to reduce contact resistance and the effect to improve tensile strength can be stably obtained when the indents in the sleeve satisfy the formulas (1) to (3).

Further embodiments of the present invention are as follows.

According to the embodiment 1 of the present invention, a cable connection structure is provided, which comprises:

a pair of power cables, each having a conductor; and

a sleeve being configured as a cylindrical metallic member and connecting the conductors of the pair of power cables,

the sleeve comprising:

multiple first indents recessed in radial directions of the sleeve and located at positions separated from each other on a first outer circumference of the sleeve, and

multiple second indents recessed in the radial directions of the sleeve and located at positions separated from each other on a second outer circumference that is different from the first outer circumference in an axial direction of the sleeve,

at least one indent among the multiple indents arranged along a circumferential direction of the sleeve having a depth different from depths of other indents on the outer circumference of the sleeve.

According to the embodiment 2 of the present invention, the cable connection structure of embodiment 1 is provided, wherein each of the pair of power cables comprises the conductor, and a cable insulating layer provided to cover an outer circumference of the conductor,

the sleeve connects the conductors exposed from the cable insulating layers of the pair of power cables, and

a semiconductive tape layer is provided to fill a difference in level between an outer circumference of the cable insulating layer of each of the pair of power cables and the outer circumference of the sleeve.

According to the embodiment 3 of the present invention, the cable connection structure of embodiment 2 is provided, wherein the cable connection structure further comprises a sleeve cover provided to surround the outer circumference of the sleeve and locked to a tip of the cable insulating layer of each of the pair of power cables, and the semiconductive tape layer is provided from the outer circumference of the sleeve to a position closer to the sleeve than an inner circumference of the sleeve cover by 0.5 mm or more and 1 mm or less.

According to the embodiment 4 of the present invention, the cable connection structure of any of embodiments 1 to 3 is provided, wherein the cable connection structure further comprises filling parts, each of which is filled in each of the multiple first indents and the multiple second indents on the outer circumference of the sleeve.

According to the embodiment 5 of the present invention, the cable connection structure of embodiment 4 is provided, wherein the filling part contains putty or clay.

According to the embodiment 6 of the present invention, the cable connection structure of any of embodiments 1 to 5 is provided, wherein on the outer circumference of the sleeve, depths of the multiple indents arranged along the circumferential direction of the sleeve satisfy the following formula (1):

$$0.02 \leq (Dcmax - Dcmin)/Dcavg \leq 0.8 \cdots (1)$$

wherein Dcmax, Dcmin, and Dcavg respectively indicate the maximum, minimum, and average values of the depths of the multiple indents arranged along the circumferential direction of the sleeve.

According to the embodiment 7 of the present invention, the cable connection structure of any of embodiments 1 to 6 is provided, wherein the multiple first indents and the multiple second indents are provided alternately in the axial direction of the sleeve, and

at least one indent among the multiple indents arranged along the axial direction of the sleeve has a depth different from depths of other indents on the outer circumference of the sleeve.

According to the embodiment 8 of the present invention, the cable connection structure of any of embodiments 1 to 7 is provided, wherein the multiple first indents and the multiple second indents are provided alternately in the axial direction of the sleeve, and

on the outer circumference of the sleeve, depths of the multiple indents arranged along the axial direction of the sleeve satisfy the following formula (2):

$$0.02 \leq (Damax - Damin)/Daavg \leq 0.8 \cdots (2)$$

wherein Damax, Damin, and Daavg respectively indicate the maximum, minimum, and average values of the depths of the multiple indents arranged along the axial direction of the sleeve.

According to the embodiment 9 of the present invention, the cable connection structure of any of embodiments 1 to 8 is provided, wherein at least one indent among all the indents provided on the sleeve has a depth different from depths of other indents on the outer circumference of the sleeve.

According to the embodiment 10 of the present invention, the cable connection structure of any of embodiments 1 to 9 is provided, wherein on the outer circumference of the sleeve, depths of all the indents satisfy the following formula (3):

$$0.01 \leq \sigma/Davg \leq 0.4 \cdots (3)$$

wherein $\sigma$ and Davg respectively indicate the standard deviation and average values of the depths of all the indents.

According to the embodiment 11 of the present invention, the cable connection structure of any of embodiments 1 to 10 is provided, wherein the multiple first indents and the multiple second indents have random depths.

According to the embodiment 12 of the present invention, the cable connection structure of any of embodiments 1 to 11 is provided, wherein each of the multiple first indents and the multiple second indents is not in contact with another indent on an inner circumference of the sleeve.

According to the embodiment 13 of the present invention, the cable connection structure of any of embodiments 1 to 12 is provided, wherein the sleeve has a point-asymmetric shape with respect to a central axis of the sleeve on a cross-section orthogonal to the central axis.

According to the embodiment 14 of the present invention, the cable connection structure of any of embodiments 1 to 13 is provided, wherein the sleeve has a rotationally asymmetric shape around a central axis of the sleeve on a cross-section orthogonal to the central axis.

According to the embodiment 15 of the present invention, the cable connection structure of any of embodiments 1 to 14 is provided, wherein the sleeve has a plane-asymmetric shape across a cross-section orthogonal to a central axis of the sleeve in a middle of the sleeve in the axial direction.

According to the embodiment 16 of the present invention, the cable connection structure of any of embodiments 1 to 15 is provided, wherein a thickness at each of the multiple first indents and the multiple second indents is thinner than thicknesses at positions other than the multiple first indents and the multiple second indents.

According to the embodiment 17 of the present invention, the cable connection structure of any of embodiments 1 to 16 is provided, wherein the thickness of the sleeve satisfies the following formula (4):

$$0.1 \leq Ti/Tn < 1 \quad \cdots \quad (4)$$

wherein Ti indicates a thickness at each of the multiple first indents and the multiple second indents, and Tn indicates a thickness at a position other than the multiple first indents and the multiple second indents.

According to the embodiment 18 of the present invention, the cable connection structure of any of embodiments 1 to 17 is provided, wherein the sleeve satisfies the following formula (5):

$$0.1 \leq D/\Phi \leq 0.4 \quad \cdots \quad (5)$$

wherein D indicates a depth of each of the multiple first indents and the multiple second indents on the outer circumference of the sleeve, and $\Phi$ indicates a diameter of circumscribed circle of the sleeve.

According to the embodiment 19 of the present invention, the cable connection structure of any of embodiments 1 to 18 is provided, wherein on the outer circumference of the sleeve, each of the multiple first indents and the multiple second indents satisfies the following formula (6):

$$0.1 \leq D/A \leq 0.4 \quad \cdots \quad (6)$$

wherein D and A respectively indicate a depth and a diameter of aperture of each of the multiple first indents and the multiple second indents on the outer circumference of the sleeve.

According to the embodiment 20 of the present invention, the cable connection structure of any of embodiments 1 to 19 is provided, wherein the sleeve satisfies the following formula (7):

$$0.2 \leq A/\Phi \leq 0.5 \quad \cdots \quad (7)$$

wherein A indicates a diameter of aperture of each of the multiple first indents and the multiple second indents on the outer circumference of the sleeve, and $\Phi$ indicates a diameter of circumscribed circle of the sleeve.

According to the embodiment 21 of the present invention, the cable connection structure of any of embodiments 1 to 20 is provided, wherein each of the multiple first indents and the multiple second indents has a convex surface on an inner circumference of the sleeve, and
the convex surface is curved in a spherical shape convex toward a central axis of the sleeve.

According to the embodiment 22 of the present invention, the cable connection structure of the embodiment 21 is provided, wherein on the inner circumference of the sleeve, a center of curvature of each of the multiple first indents and the multiple second indents is arranged at a position closer to a central axis of the sleeve than a circumscribed circle of the sleeve.

According to the embodiment 23 of the present invention, the cable connection structure of any of embodiments 1 to 22 is provided, wherein each of the multiple first indents and the multiple second indents does not radially penetrate through the sleeve.

According to the embodiment 24 of the present invention, the cable connection structure of any of embodiments 1 to 23 is provided, wherein the multiple second indents are provided at positions different from positions of the multiple first indents in the circumferential direction of the sleeve.

According to the embodiment 25 of the present invention, the cable connection structure of embodiment 24 is provided, wherein on an inner circumference of the sleeve, a part of each of the multiple second indents is interposed between the multiple first indents.

According to the embodiment 26 of the present invention, the cable connection structure of embodiment 24 or 25 is provided, wherein on an inner circumference of the sleeve, a part of each of the multiple second indents is located closer to an inner circumference connecting the deepest parts of the multiple first indents than an inner circumference connecting edge parts of the multiple first indents in the axial direction of the sleeve.

According to the embodiment 27 of the present invention, the cable connection structure of any of embodiments 24 to 26 is provided, wherein each of the multiple second indents is located in a middle of an arc between a pair of adjacent first indents among the multiple first indents when viewed in the axial direction of the sleeve.

According to the embodiment 28 of the present invention, the cable connection structure of any of embodiments 24 to 27 is provided, wherein the multiple first indents are arranged at a position of n-fold rotational symmetry around a central axis of the sleeve, and

the multiple second indents are arranged at positions different from the positions of the multiple first indents by an angle of (180/n)° around the central axis of the sleeve, wherein n indicates an integer of 2 or more, when viewed in the axial direction of the sleeve.

According to the embodiment 29 of the present invention, a connected power cable comprising at least one cable connection structure of any of embodiments 1 to 28 disclosed above is provided.

According to the embodiment 30 of the present invention, a method of producing a cable connection structure is provided, the method comprising:

preparing a pair of power cables, each having a conductor; and

connecting the conductors of the pair of power cables using a sleeve being cylindrical,

wherein the connection of the conductors comprises

forming multiple first indents recessed in radial directions of the sleeve at positions separated from each other on a first outer circumference of the sleeve, and

forming multiple second indents recessed in the radial directions of the sleeve at positions separated from each other on a second outer circumference that is different from the first outer circumference in an axial direction of the sleeve, and

in the connection of the conductors,

the multiple indents are formed by compression so that at least one indent among the multiple indents arranged along a circumferential direction of the sleeve has a depth different from depths of other indents on the outer circumference of the sleeve.

[Reference Signs List]

| 10 | Connected power cable |
|---|---|
| 20 | Cable connection structure |
| 100 | Power cable |
| 100a | First power cable |
| 100b | Second power cable |
| 110 | Conductor |
| 112 | Conductor wire |
| 114 | Conductor wire layer |
| 120 | Cable internal semiconductive layer |
| 130 | Cable insulating layer |
| 140 | Cable external semiconductive layer |
| 150 | Cable metal shield layer |
| 160 | Cable sheath |
| 170 | Cable outer circumferential structure |
| 200 | Sleeve |
| 240 | Indent |
| 240a | First indent |
| 240b | Second indent |
| 242 | Convex surface |
| 250 | Filling part |
| 260 | Semiconductive tape layer |
| 280 | Partition wall |
| 290 | Sleeve cover |
| 292 | Locking part |

| | |
|---|---|
| 300 | Insulating cylinder |
| 320 | Internal semiconductive layer |
| 340 | Insulating layer |
| 360 | Stress cone part |
| 380 | Extemal semiconductive layer |
| 400 | Protective tube |
| 480 | Filler |
| 920 | Sleeve |
| 924 | Indent |
| C1 | First outer circumference |
| C2 | Second outer circumference |
| A | Diameter of aperture of indent |
| D | Depth of indent |
| Ti | Thickness at indent |
| Tn | Thickness at position other than indent |
| C | Center of curvature |

**Claims**

1.  A cable connection structure, comprising:
    a pair of power cables, each having a conductor; and

    a sleeve configured as a cylindrical metallic member and connecting the conductors of the pair of power cables, the sleeve comprising:

    multiple first indents recessed in radial directions of the sleeve and located at positions separated from each other on a first outer circumference of the sleeve, and
    multiple second indents recessed in the radial directions of the sleeve and located at positions separated from each other on a second outer circumference that is different from the first outer circumference in an axial direction of the sleeve,

    at least one indent among the multiple indents arranged along a circumferential direction of the sleeve having a depth different from depths of other indents on the outer circumference of the sleeve,
    wherein the sleeve has a point-asymmetric shape with respect to a central axis of the sleeve on a cross-section orthogonal to the central axis.

2.  The cable connection structure according to claim 1,

    wherein the multiple first indents and the multiple second indents are provided alternately in the axial direction of the sleeve, and
    on the outer circumference of the sleeve, depths of the multiple indents arranged along the axial direction of the sleeve satisfy the following formula (2):

    $$0.02 \le (Damax - Damin)/Daavg \le 0.8 \cdots (2)$$

    wherein Damax, Damin, and Daavg respectively indicate the maximum, minimum, and average values of the depths of the multiple indents arranged along the axial direction of the sleeve.

3.  The cable connection structure according to claim 1 or 2,

    wherein on the outer circumference of the sleeve, depths of all the indents satisfy the following formula (3):

    $$0.01 \le \sigma/Davg \le 0.4 \cdots (3)$$

    wherein $\sigma$ and Davg respectively indicate the standard deviation and average values of the depths of all the indents.

4. The cable connection structure according to any one of claims 1 to 3,

wherein the thickness of the sleeve satisfies the following formula (4):

$$0.1 \leq Ti/Tn < 1 \quad \cdots \quad (4)$$

wherein Ti indicates a thickness at each of the multiple first indents and the multiple second indents, and Tn indicates a thickness at a position other than the multiple first indents and the multiple second indents.

5. The cable connection structure according to any one of claims 1 to 4,

wherein the sleeve satisfies the following formula (5):

$$0.1 \leq D/\Phi \leq 0.4 \quad \cdots \quad (5)$$

wherein D indicates a depth of each of the multiple first indents and the multiple second indents on the outer circumference of the sleeve, and $\Phi$ indicates a diameter of circumscribed circle of the sleeve.

6. The cable connection structure according to any one of claims 1 to 5,

wherein on the outer circumference of the sleeve, each of the multiple first indents and the multiple second indents satisfies the following formula (6):

$$0.1 \leq D/A \leq 0.4 \quad \cdots \quad (6)$$

wherein D and A respectively indicate a depth and a diameter of aperture of each of the multiple first indents and the multiple second indents on the outer circumference of the sleeve.

7. The cable connection structure according to any one of claims 1 to 6,

wherein the sleeve satisfies the following formula (7):

$$0.2 \leq A/\Phi \leq 0.5 \quad \cdots \quad (7)$$

wherein A indicates a diameter of aperture of each of the multiple first indents and the multiple second indents on the outer circumference of the sleeve, and $\Phi$ indicates a diameter of circumscribed circle of the sleeve.

8. The cable connection structure according to any one of claims 1 to 7,

wherein each of the multiple first indents and the multiple second indents has a convex surface on an inner circumference of the sleeve,
the convex surface is curved in a spherical shape convex toward a central axis of the sleeve, and
on the inner circumference of the sleeve, a center of curvature of each of the multiple first indents and the multiple second indents is arranged at a position closer to a central axis of the sleeve than a circumscribed circle of the sleeve.

9. The cable connection structure according to any one of claims 1 to 8,
wherein each of the multiple first indents and the multiple second indents does not radially penetrate through the sleeve.

10. The cable connection structure according to any one of claims 1 to 9,
wherein the multiple second indents are provided at positions different from positions of the multiple first indents in the circumferential direction of the sleeve.

11. The cable connection structure according to claim 10,
wherein on an inner circumference of the sleeve, a part of each of the multiple second indents is interposed between the multiple first indents.

12. The cable connection structure according to claim 10 or 11,
wherein on an inner circumference of the sleeve, a part of each of the multiple second indents is located closer to an inner circumference connecting the deepest parts of the multiple first indents than an inner circumference connecting edge parts of the multiple first indents in the axial direction of the sleeve.

13. The cable connection structure according to any one of claims 10 to 12,
wherein each of the multiple second indents is located in a middle of an arc between a pair of adjacent first indents among the multiple first indents when viewed in the axial direction of the sleeve.

14. The cable connection structure according to any one of claims 10 to 13,

wherein the multiple first indents are arranged at a position of n-fold rotational symmetry around a central axis of the sleeve, and
the multiple second indents are arranged at positions different from the positions of the multiple first indents by an angle of $(180/n)°$ around the central axis of the sleeve, wherein n indicates an integer of 2 or more, when viewed in the axial direction of the sleeve.

15. A connected power cable, comprising at least one cable connection structure according to any one of claims 1 to 14.

[Fig. 1]

[Fig. 2]

[Fig. 3]

[Fig. 4A]

[Fig. 4B]

[Fig. 5A]

[Fig. 5B]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1141779 B